# EUROPÄISCHE PATENTANMELDUNG

(11) **EP 1 238 836 A2**
(43) Veröffentlichungstag der Anmeldung: **11.09.2002**
(21) Anmeldenummer: 02002100.2
(22) Anmeldetag: 13.02.2002
(51) Int. Cl.: B60H 1/22

(54) **Zusatz-Wasserheizgerät für ein Kraftfahrzeug**

(30) Priorität: 05.03.2001 DE 10110556
(71) Anmelder: Webasto Thermosysteme International GmbH, 82131 Stockdorf (DE)
(72) Erfinder: Höglmaier, Werner, 82194 Gröbenzell (DE); Renner, Markus, 85521 Riemerling (DE); Kunz, Stefan, 82131 Stockdorf (DE)
(74) Vertreter: Wiese, Gerhard

(57) **Zusammenfassung**

Das Wasserheizgerät (30) ist für ein Kraftfahrzeug (10) bestimmt, dessen Motor (14) einen Kühlkreislauf (16) mit einem Kühlaggregat (18, 20, 22) aufweist, der mit einem Heizkreislauf (26) des Wasserheizgerätes (30) koppelbar ist. Damit verhindert wird, dass das Wasserheizgerät (30) heizt, während der Motor (14) gleichzeitig gekühlt wird, ist das Wasserheizgerät (30) dazu eingerichtet, den Betriebszustand des Kühlaggregates (18, 20, 22) zu ermittelt und sich entsprechend abzuschalten.

## Beschreibung

Die Erfindung betrifft ein Zusatz-Wasserheizgerät für ein Kraftfahrzeug, dessen Motor einen Kühlkreislauf mit wenigstens einem zur Kühlung des Motors dienenden Aggregat aufweist, der mit einem Heizkreislauf des Wasserheizgerätes koppelbar ist. Ferner betrifft die Erfindung ein Kraftfahrzeug mit einem derartigen Zusatz-Wasserheizgerät, sowie ein Verfahren zum Abschalten eines derartigen Zusatz-Wasserheizgerätes.

Als "Wasser"-Heizgerät werden hier allgemein jene Heizgeräte bezeichnet, bei denen ein flüssiger Wärmeträger von einem Brenner erwärmt wird. Als Wärmeträger können dabei auch andere Flüssigkeiten als Wasser bzw. Kühlwasser verwendet werden, beispielsweise übliche flüssige Kühlmittel, insbesondere Öle, oder Flüssigkeitsgemische.

Aus der gattungsbestimmenden EP 0 911 197 A2 sind ein Verfahren und eine Vorrichtung zum Abschalten eines Wasserheizgerätes bekannt, das in einem Heizkreislauf angeordnet ist, durch den eine Umwälzpumpe flüssigen Wärmeträger zu einem Wärmetauscher fördert. Am Heizkreislauf erfasst ein Temperaturfühler die Temperatur des Wärmeträgers. Ein Steuergerät steuert das Heizgerät und die Umwälzpumpe in Abhängigkeit von einem Signal des Temperaturfühlers. Ein Heizgebläse fördert Heizluft durch den Wärmetauscher und führt sie einem Fahrgastraum zu. Der Heizkreislauf ist auch in einen Kühlkreislauf eines Motors eingebunden, durch den Kühlwasser zu einem Kühler strömt. Der Kühler ist während der Fahrt des Fahrzeuges dem Fahrtwind ausgesetzt. Darüber hinaus ist in aller Regel auch ein Lüfter vorgesehen, von dem zusätzlich Kühlluft durch den Kühler gefördert werden kann. Im Kühlkreislauf ist ein Thermostatventil angeordnet, das bei vorbestimmten Temperaturen des Kühlwassers schließt bzw. öffnet. Ferner ist in der Regel am Kühlkreislauf auch ein Temperaturfühler angeordnet, dessen Signal den Lüfter des Kühlers in Betrieb setzt, wenn das Kühlwasser eine vorbestimmte maximale Grenztemperatur erreicht hat.

Der Heizkreislauf und der Kühlkreislauf sind aus zwei Gründen gekoppelt. Zum einen soll das Heizgerät den Fahrgastraum aufheizen und zugleich den Motor vorwärmen, zum anderen soll die Abwärme des Motors auch zum Heizen des Fahrgastraumes verwendet werden. Die Kopplung der beiden Kreisläufe hat jedoch den Nachteil, dass bei bestimmten Betriebszuständen der Wärmeträger im Heizkreislauf vom Heizgerät erwärmt wird, während er nachfolgend im Kühlkreislauf vom Kühler und dessen Lüfter wieder abgekühlt wird. Je stärker nun das Heizgerät heizt, um so stärker wird vom Lüfter gekühlt. Hat sich dieser "Teufelskreis" einmal eingestellt, kann er nur schwer durchbrochen werden.

Ein gleichzeitiges Heizen und Kühlen muss daher von vornherein verhindert werden. Dazu wird die zulässige Maximaltemperatur des Wärmeträgers im Heizkreislauf niedriger als die maximale Grenztemperatur des Kühlwassers gewählt. Das Heizgerät wird dadurch abgeschaltet, bevor der Lüfter zu kühlen beginnt. Dies hat allerdings den Nachteil, dass die Maximaltemperatur des Wärmeträgers verhältnismäßig gering und damit auch das Heizgerät und der Wärmetauscher im Heizkreislauf schlechte Wirkungsgrade aufweisen. Ferner werden bei verschiedenen Fahrzeug- und Motortypen verschiedene Grenztemperaturen für das Kühlwasser vorgegeben, so dass dort einzubauende Heizgeräte jeweils entsprechend anzupassen bzw. zu programmieren sind.

Aus DE 196 44 535 C1 ist ein Verfahren zum bedarfsgerechten Einschalten eines Fahrzeug-Heizgerätes auf der Grundlage einer Messung der Temperatur des Kühlwassers des Motors bekannt. Von zwei zeitlich aufeinanderfolgenden Temperaturwerten wird auf einen sich einstellenden Kühlwassertemperatur-Erwartungswert geschlossen und dieser mit einem Kühlwassertemperatur-Sollwert verglichen. Das Heizgerät wird eingeschaltet, wenn der Erwartungswert unter dem Sollwert liegt. Mit diesem Verfahren kann das Heizgerät zwar bedarfsgerechter eingeschaltet werden, zum Erkennen des oben beschriebenen Teufelskreises kann es jedoch nicht verwendet werden.

Aus DE 43 14 089 C1 ist ein Heizkreislauf eines Fahrzeuges mit einem motorunabhängigen Heizgerät bekannt, bei dem nur ein Thermostatventil den Wärmeträgerfluss entweder durch eine Umwälzpumpe, ein Heizgerät und einen Wärmetauscher leitet, oder zusätzlich durch einen Motor. Auch bei diesem Heizkreislauf besteht das Problem, dass bei bestimmten Betriebszuständen das Heizgerät heizt, während der Motor zugleich gekühlt wird.

Der Erfindung liegt die Aufgabe zugrunde, ein gattungsgemäßes Zusatz-Wasserheizgerät zu verbessern und insbesondere einen Betriebszustand zu verhindern, bei dem das Wasserheizgerät heizt, während der Motor gleichzeitig gekühlt wird.

Diese Aufgabe ist erfindungsgemäß durch die Merkmale des Patentanspruchs 1 hinsichtlich einer geeigneten Vorrichtung bzw. des Patentanspruchs 5 hinsichtlich eines geeigneten Verfahrens gelöst.

Gemäß der Erfindung ist ein Zusatz-Wasserheizgerät der eingangs genannten Art durch ein ihm zugeordnetes Steuergerät und eine zwischen dem Aggregat und dem Steuergerät angeordnete Datenleitung bzw. Signalleitung dazu eingerichtet, den Betriebszustand eines der Kühlung des Motors dienenden Aggregates zu ermittelt, und sich in Abhängigkeit vom ermittelten Betriebszustand zumindest abzuschalten. Das Abschalten erfolgt in der Regel dann, wenn das Wasserheizgerät ermittelt, dass das Aggregat den Motor aktiv kühlt. Die Aufgabe wird ferner von einem Kraftfahrzeug gelöst, bei dem ein derartiges erfindungsgemäßes Zusatz-Wasserheizgerät eingebaut ist. Schließlich wird die Aufgabe auch durch ein Verfahren der eingangs genannten Art gelöst, bei dem das Zusatz-Wasserheizgerät den Betriebszustand des der Motorkühlung dienenden Aggregates ermittelt, und sich entsprechend abschaltet, während das Aggregat den Motor kühlt.

Bei der erfindungsgemäßen Lösung wird nicht, wie bisher üblich, eine Temperaturmessung zum Steuern des Wasserheizgerätes verwendet, sondern das Wasserheizgerät bzw. dessen zugeordnetes Steuergerät wird beispielsweise über eine Signalleitung mit dem der Motorkühlung dienenden Aggregat verbunden, so dass das Heizgerät ermitteln kann, wenn das Aggregat aktiv zu kühlen beginnt oder seine Kühlleistung erhöht. Das Wasserheizgerät braucht sich dann nur abzuschalten und ein gleichzeitiges Heizen und Kühlen wird sicher verhindert.

Der Wärmeträger wird von dem erfindungsgemäßen Wasserheizgerät regelmäßig bis zur maximalen Grenztemperatur des Kühlwassers aufgeheizt, so dass das Wasserheizgerät und der Wärmetauscher des Heizkreislaufes mit einem verbesserten Wirkungsgrad arbeiten. Ein Anpassen oder Umprogrammieren von Wasserheizgeräten für verschiedene Grenztemperaturen des Kühlwassers unterschiedlicher Fahrzeug- bzw. Motor-Typen ist nicht mehr erforderlich.

Gemäß einer vorteilhaften Weiterbildung der Erfindung dient als Datenleitung der Signalleitung ein im Kraftfahrzeug vorhandener Datenbus. Bei heutigen Kraftfahrzeugen ist es üblich, dass Einrichtungen wie ein Aggregat zur Kühlung eines Motors und auch ein Zusatz-Wasserheizgerät beispielsweise an einen CAN-Datenbus angeschlossen sind. Dieser Datenbus kann daher zum Übermitteln der Abfrage des Betriebszustandes des Aggregates verwendet werden. Damit kann der Gegenstand der Erfindung besonders einfach realisiert werden.

Heutige Aggregate zum Kühlen eines Motors weisen in der Regel einen Lüfter auf, der von einem Elektromotor angetrieben wird. Bei einer vorteilhaften Weiterbildung ermittelt das Wasserheizgerät bzw. dessen Steuergerät den Betriebszustand des Lüfters bzw. des antreibenden Elektromotors und prüft damit, ob mit dem Aggregat gerade gekühlt wird. Alternativ oder zusätzlich können vom Wasserheizgerät andere Kenngrößen von Aggregaten zur Motorkühlung abgefragt werden, um zu ermitteln, ob der Motor bereits von diesem gekühlt wird. Beispielsweise kann der Betriebszustand einer Kühlwasser-Umwälzpumpe ermittelt werden. Es ist auch denkbar, dass die Stellung einer Kühlluft-Umleitvorrichtung abgefragt wird.

Nachfolgend wird ein Ausführungsbeispiel eines erfindungsgemäßen Zusatz-Wasserheizgerätes eines Kraftfahrzeuges anhand der beigefügten schematischen Zeichnung näher erläutert. Es zeigt:

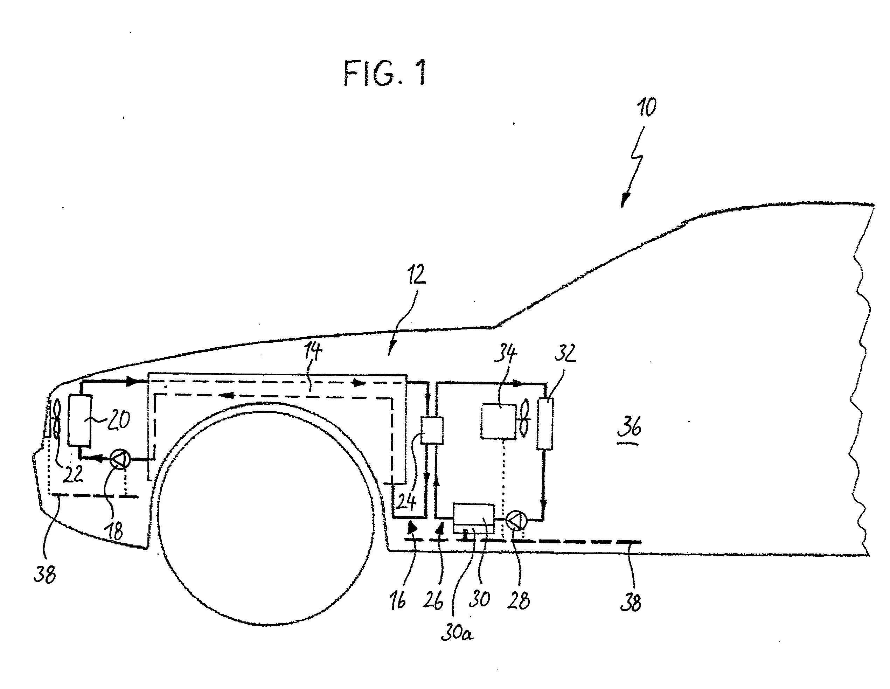

- Fig. 1: den vorderen Abschnitt eines Kraftfahrzeuges mit einem ein Zusatz-Wasserheizgerät enthaltenden Heizkreislauf und mit einem Kühlkreislauf.

Das in Fig. 1 dargestellte Kraftfahrzeug 10 weist einen in einem Motorraum 12 angeordneten Verbrennungsmotor 14 auf, den ein Kühlkreislauf 16 durchsetzt. In dem Kühlkreislauf 16 sind als Aggregate zur Kühlung des Verbrennungsmotors 14 eine Kühlwasserpumpe 18 und ein Kühler 20 mit einem Lüfter 22, sowie ferner eine Umschalteinrichtung 24 angeordnet. Die Umschalteinrichtung 24 koppelt den Kühlkreislauf 16 an einen Heizkreislauf 26, in dem ferner eine Umwälzpumpe 28, ein Wasserheizgerät 30 mit einem Steuergerät 30a und ein Wärmetauscher 32 mit einem Gebläse 34 angeordnet sind.

Im Betrieb des Verbrennungsmotors 14 fördert die Kühlwasserpumpe 18 Kühlwasser durch den Kühler 20, wo es von dem anströmenden Fahrtwind und von Kühlluft gekühlt wird, die der Lüfter 22 durch den Kühler 20 bläst. Das abgekühlte Kühlwasser strömt anschließend durch den Verbrennungsmotor 14, an der Um schalteinrichtung 24 vorbei wieder zur Kühlwasserpumpe 18. Es erwärmt sich dabei.

Im Heizkreislauf 26 kann alternativ oder gleichzeitig ein Wärmeträger, der im dargestellten Beispiel ebenfalls Kühlwasser ist, von der Umwälzpumpe 28 durch das Wasserheizgerät 30, an der Umschalteinrichtung 24 vorbei zum Wärmetauscher 32 gefördert werden. Dort bläst das Gebläse 34 Heizluft durch den Wärmetauscher 32 und fördert sie in einen Fahrgastraum 36. Der Wärmeträger kühlt dabei ab.

Die Umschalteinrichtung 24 ermöglicht es, den Kühlkreislauf 16 mit dem Heizkreislauf 26 wahlweise zu koppeln, so dass entweder mit dem Wasserheizgerät 30 der Verbrennungsmotor 14 vorgewärmt oder mit der Abwärme des Verbrennungsmotors 14 der Fahrgastraum 36 geheizt werden kann.

Die Kühlwasserpumpe 18, der Lüfter 22, die Umwälzpumpe 28, das Wasserheizgerät 30 und das Gebläse 34 sind jeweils an einen CAN-Datenbus 38 angeschlossen, der im Kraftfahrzeug 10 verlegt ist.

Um zu verhindern, dass beim Zusammenspiel zwischen den beiden Kreisläufen 16 und 26 einerseits ein Aggregat des Kühlkreislaufes 16 das Kühlwasser kühlt und andererseits das Wasserheizgerät 30 das Kühlwasser aufheizt, ist vorgesehen, dass das Steuergerät 30a im Betrieb des Wasserheizgerätes 30 den Betriebszustand des Lüfters 22 über den CAN-Datenbus 38 regelmäßig ermittelt und sich abschaltet, wenn der Lüfter 22 betrieben wird, also immer dann, wenn das Kühlwasser am Kühler 20 durch die vom Lüfter 22 geförderte Kühlluft aktiv gekühlt wird.

### Bezugszeichenliste

- 10: Fahrzeug
- 12: Motorraum
- 14: Motor, insbesondere Verbrennungsmotor
- 16: Kühlkreislauf
- 18: Kühlwasserpumpe
- 20: Kühler
- 22: Lüfter
- 24: Umschalteinrichtung
- 26: Heizkreislauf
- 28: Umwälzpumpe
- 30: Wasserheizgerät
- 30a: Steuergerät des Wasserheizgerätes
- 32: Wärmetauscher
- 34: Gebläse
- 36: Fahrgastraum
- 38: Datenbus, insbesondere CAN-Datenbus

## Patentansprüche

1. Zusatz-Wasserheizgerät (30) für ein Kraftfahrzeug (10), dessen Motor (14) einen Kühlkreislauf (16) mit wenigstens einem zur Kühlung des Motors dienenden Aggregat (18, 20, 22) aufweist, der mit einem Heizkreislauf (26) des Wasserheizgerätes (30) koppelbar ist,
**dadurch gekennzeichnet, dass** das Wasserheizgerät (30) ein Steuergerät (30a) aufweist, mittels dem über eine Signal- oder Datenleitung (38) der Betriebszustand des Aggregates (18, 20, 22) ermittelt und in Abhängigkeit vom ermittelten Betriebszustand ein Steuervorgang am Wasserheizgerät (30) ausgelöst wird, der zumindest ein Abschalten des Wasserheizgeräts (30) ermöglicht.

2. Wasserheizgerät nach Anspruch 1, **dadurch gekennzeichnet, dass** als Datenleitung ein im Kraftfahrzeug (10) vorhandener Datenbus (38) dient.

3. Wasserheizgerät nach Anspruch 1 oder 2, **dadurch gekennzeichnet, dass** als Aggregat ein Lüfter (22) dient, der im Zusammenhang mit einem Kühler (20) vorgesehen ist.

4. Kraftfahrzeug (10) mit einem Zusatz-Wasserheizgerät (30) nach einem der Ansprüche 1 bis 3.

5. Verfahren zum Abschalten eines Zusatz-Wasserheizgerätes (30) in einem Kraftfahrzeug (10), dessen Motor (14) einen Kühlkreislauf (16) mit einem Kühlaggregat (18, 20, 22) aufweist, der mit einem Heizkreislauf (26) des Wasserheizgerätes (30) koppelbar ist, **dadurch gekennzeichnet, dass** das Wasserheizgerät (30) den Betriebszustand des Kühlaggregates (18, 20, 22) ermittelt und sich in Abhängigkeit vom ermittelten Betriebszustand zumindest abschaltet.

6. Verfahren nach Anspruch 5, **dadurch gekennzeichnet, dass** der Betriebszustand des Kühlaggregates (18, 20, 22) mit Hilfe eines im Kraftfahrzeug (10) vorhandenen Datenbusses (38) ermittelt wird.

7. Verfahren nach Anspruch 5 oder 6, **dadurch gekennzeichnet, dass** als Kühlaggregat (18, 20, 22) ein Kühler (20) mit einem Lüfter (22) vorgesehen wird, und das Wasserheizgerät (30) den Betriebszustand des Lüfters (22) ermittelt.
